# EUROPEAN PATENT SPECIFICATION

(11) **EP 2 243 016 B1**
(45) Date of publication and mention of the grant of the patent: **07.04.2021**
(21) Application number: 09711570.3
(22) Date of filing: 19.02.2009
(51) Int. Cl.: G01N 21/65, G01J 3/44, G01J 3/02

(54) **STAND-OFF DETECTION OF HAZARDOUS SUBSTANCES SUCH AS EXPLOSIVES AND COMPONENTS OF EXPLOSIVES**
FERNNACHWEIS GEFÄHRLICHER STOFFE WIE SPRENGSTOFFE UND SPRENGSTOFFBESTANDTEILE
DÉTECTION À DISTANCE DE SÉCURITÉ DE SUBSTANCES DANGEREUSES TELLES QUE DES EXPLOSIFS ET DES COMPOSANTS D'EXPLOSIFS

(30) Priority: 19.02.2008 SE 0800374; 19.02.2008 US 29698
(43) Date of publication of application: 27.10.2010
(73) Proprietor: Portendo Standoff Detection AB, 131 46 Nacka (SE)
(72) Inventor: ÖSTMARK, Henric, S-141 41 Huddinge (SE); AKKE, Fredrik, S-181 61 Lindingö (SE)
(74) Representative: Bergenstråhle Group AB
(86) International application number: PCT/SE2009/000097
(87) International publication number: WO 2009/105009

(56) References cited:
- EP-A2- 0 818 674
- WO-A1-2006/130921
- US-B1- 6 608 677
- ASHER S A: "UV RESONANCE RAMAN SPECTROSCOPY USING A NEW CW LASER SOURCE: CONVENIENCE AND EXPERIMENTAL SIMPLICITY", APPLIED SPECTROSCOPY, THE SOCIETY FOR APPLIED SPECTROSCOPY. BALTIMORE, US, vol. 47, no. 5, 1 May 1993 (1993-05-01), pages 628-633, XP000363252, ISSN: 0003-7028, DOI: 10.1366/0003702934067225
- ROLAND K APPEL ET AL: "Enhanced Raman spectroscopy using collection optics designed for continuously tunable excitation; Enhanced Raman spectroscopy using continuously tunable excitation", MEASUREMENT SCIENCE AND TECHNOLOGY, IOP, BRISTOL, GB, vol. 13, no. 3, 1 March 2002 (2002-03-01), pages 411-420, XP020063463, ISSN: 0957-0233, DOI: 10.1088/0957-0233/13/3/324
- SANFORD A. ASHER: "Ultraviolet Resonance Raman Spectrometry for Detection and Specification of Trace Polycyclic Aromatic Hydrocarbons", ANALYTICAL CHEMISTRY, vol. 56, no. 4, 1 April 1984 (1984-04-01), pages 720-724, XP055374847,
- GAFT M ET AL: "UV gated Raman spectroscopy for standoff detection of explosives", OPTICAL MATERIALS, ELSEVIER SCIENCE PUBLISHERS B.V. AMSTERDAM, NL, vol. 30, no. 11, 2 January 2008 (2008-01-02), pages 1739-1746, XP022713651, ISSN: 0925-3467, DOI: 10.1016/J.OPTMAT.2007.11.013 [retrieved on 2008-01-02]
- M. GAFT ET AL: 'UV gated Raman spectroscopy for standoff detection of explosives' OPTICAL MATERIALS, [Online] vol. 30, no. 11, July 2008, pages 1739 - 1746, XP022713651 Retrieved from the Internet: <URL:http://www.sciencedirect.com/science/a rticle/B6TXP-4RGVWGG-2/1/f69393696d87e2ea6d a88aad5ebb5171>

## Description

### RELATED APPLICATIONS

This application claims priority and benefit from Swedish patent application No. 0800374-1, filed February 19, 2008, and U.S. provisional patent application No. 61/029,698, filed February 19, 2008, the entire teachings of which are incorporated herein by reference.

### TECHNICAL FIELD

The present invention relates to detection of substances or molecules of one kind, in particular of hazardous substances such as explosives and components of explosives.

### BACKGROUND

Substances of different types such as hazardous substances, for example explosives and substances dangerous to the environment can be detected using Raman-spectroscopy, for example see the published International patent application No. WO 2007/008151.

When monochromatic light such as from a laser hits a quantity of a substance, for example a hazardous substance such as an explosive or a component thereof, most of the light is scattered. Most of the scattered light has the same wavelength as the incoming light whereas a small part of the scattered light have other wavelengths. The illuminating light can be entirely elastically scattered, so called Rayleigh scattering. The light can also be scattered in other ways and one way is Raman scattering. The Raman spectrum obtained by Raman scattering contains a number of sharp bands/lines which together are unique to molecules of every individual kind of the substance. Every line in the Raman spectrum corresponds to a vibrational mode of the molecules of the respective kind. The fact that the Raman spectrum is unique to molecules of the same kind can be used to identify the molecules which are contained in the quantity of the substance that has been illuminated.

Thus, a homogeneous substance, i.e. a substance that consists of molecules of one kind, has one or more unique light absorption wavelengths. When the wavelength of the light, with which the substance is illuminated, is tuned to, i.e. substantially agrees with to or is relatively close to such an absorption wavelength, an enhancement, so called resonance, of the Raman spectrum is obtained. The enhancement effect increases the sensitivity of detection using Raman spectroscopy, which can allow detection of small quantities of the substance. Also, the tuning of the wavelength to an absorption wavelength provides an improvement in selectivity, i.e. the substance can by analysis of recorded Raman spectra more easily be distinguished from other substances. Application of light of wavelengths tuned to absorption wavelengths in Raman spectroscopy is referred to as resonance enhanced Raman spectroscopy RRS (also abbreviated as RERS).

Using Raman spectroscopy to discover substances located at a distance is previously known from for example Ming Wu et al., "Stand-off Detection of Chemicals by UV Raman Spectroscopy", Appl. Spectr., Vol. 54, No. 6, 2000, A. J. Sedlacek III and M. D. Ray, "Short Range Noncontact Detection of Surface Contaminants Using Raman LIDAR", Brookhaven National Laboratory BNL-69445, published in Proc. SPIE 4577, 95 (2001), T. H. Chyba et al., "Laser Interrogation of Surface Agents (LISA) for Stand-off Sensing of Chemical Agents", Brookhaven National Laboratory BNL-69444-AB, presented at the 21st Internat. Laser Radar Conf. (ILRC), Quebec, Canada, July 8-12, 2002, and U.S. patent 6,608,677. In the procedures described in these documents equipment is used which includes a laser that emits light of a fixed wavelength in the UV range towards the object to be examined. Light from the object is collected, using a reflecting telescope, from the same direction as that of the laser light. The collected light is filtered using a notch filter for the emitted wavelength and is thereafter fed to a spectroscope. Thus, the collected light can be provided to a grating based spectroscope using a bundle of optical fibres, which at its output end has the fibres arranged in a row along the input slot of the spectroscope. Using Resonance Raman spectroscopy with a telescopic system for detecting explosives is known from Gaft, M. et al., "UV gated Raman spectroscopy for standoff detection of explosives", Optical Materials 30, 2008, 1739-1746. In this publication, the possibility of using Resonance Raman spectroscopy for standoff detection of explosives is briefly mentioned. Furthermore, ordinary Raman spectroscopy (i.e. not resonance enhanced Raman spectroscopy) is employed using a plurality of different excitation wavelengths.

### SUMMARY

It is an object of the present invention to provide a method for detection of substances, which can be carried out with high selectivity, sensitivity and/or accuracy, as defined by the appended claims.

Thus generally, a procedure based on Raman spectroscopy can be used. As is known, a Raman spectrum for a homogeneous substance is recorded using ordinary Raman spectroscopy by illuminating with light of a wavelength, which is so much separated from the resonance wavelengths of the substance that resonance effects are totally negligible. Such a similar "ordinary" Raman spectrum is then in principle obtained by illumination with light having another wavelength, which also is distant from the wavelengths of resonance. An RRS spectrum, i.e. a spectrum recorded using resonance effects, i.e. using resonance enhanced Raman spectroscopy, is on the contrary unique also to the illuminating light and thus separated from the RRS spectrum which is obtained by illumination with light of another wavelength. The differences can include that intensities and widths of lines in recorded RRS spectra differ and also which lines that are discernable therein.

Furthermore, it has turned out that the change of RRS spectra for different wavelengths around an absorption wavelength of a substance is unique for the substance and for a chosen absorption wavelength. To determine whether a substance or molecules of a given kind exist/s/ in a sample, RRS spectra can thus be recorded for a plurality of wavelengths around an absorption wavelength of the substance or generally for molecules of a given kind and thereafter be analysed. In such an analysis for example the change of the magnitude of the light intensity for a certain wavelength can be used, for example for the absorption wavelength or for a multiple of the corresponding wave number or frequency, such as for the double frequency. Thus generally, the intensity for all these frequencies can be used. The analysis can also include the intensity at one or more other absorption wavelengths of the substance, as intensities at such other wavelengths can also become discernible and measurable when the wavelength of the illuminating light is near the chosen absorption wavelength.

Raman and in particular RRS spectra for different wavelengths of the illuminating light of one or more substances, which one desires to identify, can be recorded and analysed in advance, for example as has been indicated above. They can also or alternatively be stored in a database. Light scattered by a sample or an object is thereafter collected, for example using a telescopic system, and the corresponding Raman spectrum is in conventional way obtained by dividing the light in wavelengths in a spectrometer. To identify one or several substances in the sample or the object the recorded spectrum can then be compared to spectra in the database or it can be analysed in some other way.

Generally thus, in a procedure of determining whether an object contains a substance or molecules of some specific kind, in particular a hazardous substance such as an explosive or a component of an explosive, the object can be illuminated with light of a definite wavelength from a light source and the light scattered by the object be analysed to obtain a Raman spectrum. The light scattered by the object can be collected and concentrated using an optical system, in particular an optical system of telescopic type, to be analysed by a spectrometer. The light emitted from the light source is chosen to be of a plurality of different wavelengths around a wavelength agreeing with an absorption wavelength of said substance or molecules of the specific kind. A Raman spectrum is recorded for each such wavelength and the obtained Raman spectra are thereafter analysed to determine whether the object contains said substance or molecules of the specific kind. The different wavelengths with which the light is emitted can be chosen so that they are larger than said absorption wavelength or so that they are smaller than said absorption wavelength or so that they are both larger and smaller than said absorption wavelength. The wavelengths can be evenly distributed, i.e. have a constant distance between adjacent wavelengths either taken in wavelengths, wave numbers or frequencies. The wavelengths should be at small distance from said absorption wavelength compared to the distance between adjacent absorption wavelengths, for example at most 10 nm, and the distance between adjacent wavelengths can for example be in the range of less than 0.5 nm and typically be around 0.1 nm.

Such a procedure, using the change of RRS spectra at wavelengths relatively near an absorption wavelength, can with a relatively high sensitivity and selectivity decide whether a substance or molecules of the specific kind exist/s/ in an object or a sample.

Additional objects and advantages of the invention will be set forth in the description which follows, and in part will be obvious from the description, or may be learned by practice of the invention. The objects and advantages of the invention may be realized and obtained by means of the methods, processes, instrumentalities and combinations particularly pointed out in the appended claims.

### BRIEF DESCRIPTION OF THE DRAWINGS

While the novel features of the invention are set forth with particularly in the appended claims, a complete understanding of the invention, both as to organization and content, and of the above and other features thereof may be gained from and the invention will be better appreciated from a consideration of the following detailed description of non-limiting embodiments presented hereinbelow with reference to the accompanying drawings, in which:
- Fig. 1a is a schematic of equipment for performing Raman spectroscopy,
- Fig. 1b is a picture corresponding to Fig. 1a for Raman spectroscopy concerning a sample located at a distance from the measuring equipment,
- Figs. 2a and 2b are schematics illustrating the principles of Raman spectroscopy and resonance enhanced Raman spectroscopy, respectively,
- Fig. 3 is a diagram showing the Raman spectrum of a substance chosen as an example,
- Figs. 4 - 7 are diagrams corresponding to Fig. 3 for cases where the illuminating light has a much larger wavelength than an absorption wavelength of the substance, where the wavelength is closer to the absorption wavelength, where the wavelength is very close to the absorption wavelength and where the wavelength corresponds to the absorption wavelength, respectively, and
- Figs. 8 and 9 are schematics showing components of an installation for Raman spectroscopy.

### DETAILED DESCRIPTION

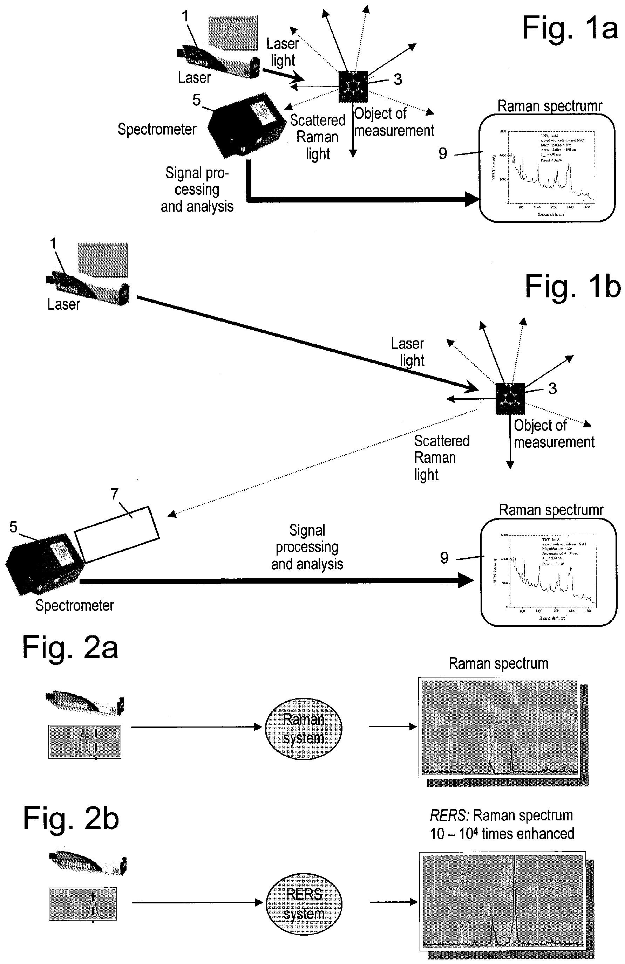

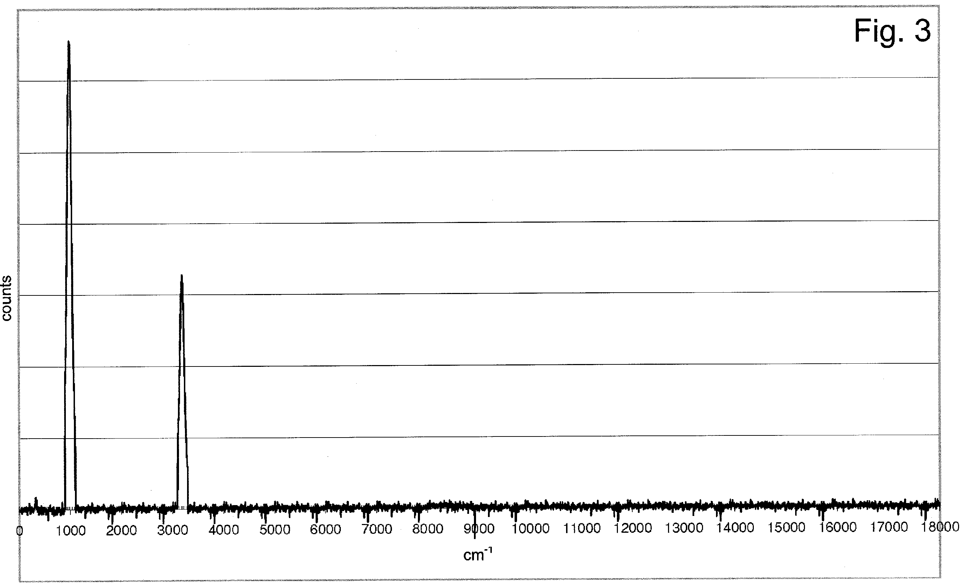

In Fig. 1a a setup for Raman spectroscopy is schematically shown. Monochromatic light from a laser 1 is directed towards an object of measurement or a sample 3. When the light hits the object, most of the light is scattered. The scattered light has for the most part the same wavelength as the incoming light. However, a small part of the scattered light will have shifted wavelengths. The scattered light is received and detected by a spectrometer 5. The spectrometer can, using suitable signal processing, display or in some other way output a spectrum, which can be displayed as a diagram. The spectrum of the wavelength shifted light is called a Raman spectrum. The Raman spectrum contains a number of sharp bands/lines or peaks, which project from an underlying more evenly varying background level, compare Fig. 3. The bands, lines or peaks are characteristic of the molecules included in the object of measurement. Every line of a Raman spectrum actually corresponds to a vibrational mode in the bonds of the molecules of one kind.

If the wavelength of the light emitted from the exciting laser 1 agrees with an absorption wavelength of molecules of one kind that are included the object 3 of measuring, an enhanced Raman spectrum can be obtained. This effect is used in so called resonance enhanced Raman spectroscopy (RRS). The resonance enhancement is very useful both for increasing the sensitivity and for increasing the selectivity using Raman spectroscopy in identifying molecules of different kinds, i.e. for distinguishing molecules of one kind from molecules of other kinds. The increased sensitivity can also be used for detection at relatively large geographic distances ("stand-off detection") as will be described below. Simple Raman spectroscopy and RRS are schematically illustrated in Figs. 2a and 2b, respectively.

An installation for performing measurements of an object located at a distance from the measuring equipment is schematically illustrated in Fig. 1b. The installation mainly differs from the installation of Fig. 1a in the larger distance between the laser 1 and the object 3 of measurement and between the spectrometer 5 and the object of measurement and in the fact that the spectrometer 5 is provided with telescope optics 7, i.e. an optical system of the type used in a telescope except the ocular thereof. The optical system focuses light incoming from the object 3 of measurement towards the spectrometer and in particular towards a frequency dividing device, not shown, included therein, from which the frequency divided light is provided to a light sensitive surface of a light detector, not shown.

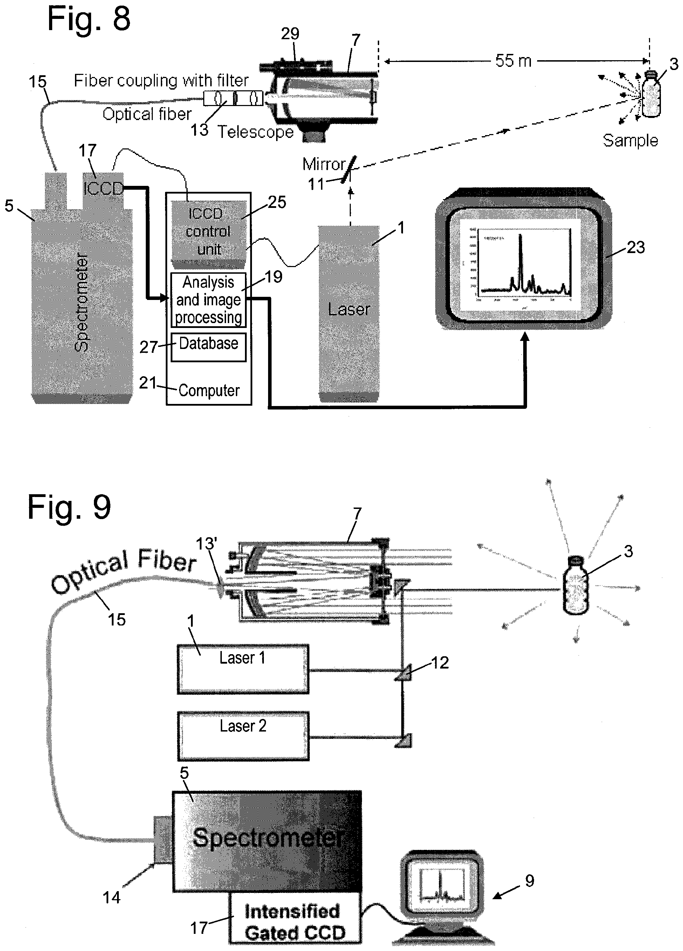

Examples of components which can be included in the installation appear from Fig. 8. A laser 1 outputs light pulses towards a mirror 11, which reflects the light pulses in the direction of object 3. In the figure the object is said to be located at a distance of 55 m. However, the installation can of course be used for detection at distances within a wide range, for example within a range between 5 and 2000 m. Light from the object is collected by an optical system 7 of telescopic type, corresponding to that is used in a Schmidt-Cassegrain telescope in this embodiment of the installation, but other optical systems can of course be used. The mirror 11 can be placed so that the light that is directed towards the object 3 is parallel to and directed opposite the light, which is collected by the optical system, compare the prisms 12 in Fig. 9. The collected light is provided to a unit 13, which includes filters and a device, such as one or more lenses, for coupling with an optical fibre 15. The optical fibre conducts the filtered, collected light to a spectrometer 5, including a wavelength dividing device, for example of the grating type, and a light detector, here shown as an ICCD ("Intensified gated Charge Coupled Device") 17. The output signal of the ICCD is conducted to an analysis and image processing module 19 of a computer 21. The result of the image processing can be displayed on the monitor 23. A control unit or control module 25, suitably arranged in or coupled to the computer 21, controls the laser 1 and in particular the times when light pulses will be emitted. The control module also controls the ICCD unit 17, so that the unit can read received light during a time window, which has a chosen delay relative to each emitted light pulse and which has a suitably chosen length to achieve an optimum detection of the scattered light of interest.

In resonance enhanced Raman spectroscopy the peaks in the original Raman spectrum are enhanced in various degrees, i.e. the mutual relationship between the heights of peaks is changed. Moreover, peaks can appear at multiples of the corresponding wave number or frequency, when the wavelength of the by the laser emitted light is at or near the considered absorption wavelength. If there is a peak at the wave number 1000 cm⁻¹ there can accordingly appear peaks at the wave numbers 2000 cm⁻¹, 3000 cm⁻¹ etc.

RRS spectra captured for illumination with monochromatic light of wavelengths around an absorption wavelength of one or more homogeneous substances/molecules of one or more kinds of interest can first be determined in measurements. Measured spectra can be analysed to obtain characteristics of different types such as a characteristic change of a line intensity for illumination with light pulses of wavelengths near an absorption wavelength. As an alternative or in addition measured spectra can be stored in a database. Thereupon, RRS spectra are in the corresponding way recorded for a sample or a quantity 3 of an unknown substance for a plurality of different wavelengths around an absorption peak of a homogeneous substance, the RRS spectra of which already have been recorded according to the description above. The recorded spectra are analysed as by determining whether they have the previously determined characteristics of a homogenous substance. If there is a sufficiently good correspondence between one or more such characteristics, it can be decided that the unknown sample or quantity contains the homogeneous substance. Alternatively, the Raman spectra recorded for the unknown sample or quantity can be compared to the already determined spectra which are stored in the database. If there is a sufficiently large agreement between the now recorded spectra and the stored spectra for a homogeneous substance, it can with a relatively high accuracy be decided that the other substance exists in the sample or quantity of the unknown substance. This gives the determination method a high selectivity.

To be capable of performing such a determination the sample 3 of the unknown substance has to be illuminated with light of a plurality of different wavelengths. This can in the easiest way be achieved if the exciting laser 1 is tunable or is provided with a wavelength modulator, not shown. Then, the control module 25 also controls the wavelength of the light pulses output from the laser. A plurality of exciting lasers can also be used, for example if so required for different wavelength regions, compare Fig. 9.

Thus, the Raman spectrum of a substance is changed in relatively high degree and in a way specific to the substance, when the wavelength of the light, with which the substance is illuminated, approaches an absorption wavelength of the substance. An RRS spectrum of a substance can for example look as in the diagram of Fig. 3 for a good signal-to-noise ratio. This spectrum has been obtained by illumination with light of a wavelength, that corresponds to the wave number 0 in the diagram and that agrees with to a chosen or considered absorption wavelength of the substance. The displayed spectrum shows the result of so called anti-Stokes scattering, for which the Raman scattering results in a light of higher energy, i.e. light having a shorter wavelength. The Raman spectrum of the substance here has two peaks, one at the wave number 1000 cm⁻¹ and one at 3200 cm⁻¹, the wave numbers given relative to the wave number of the illuminating light.

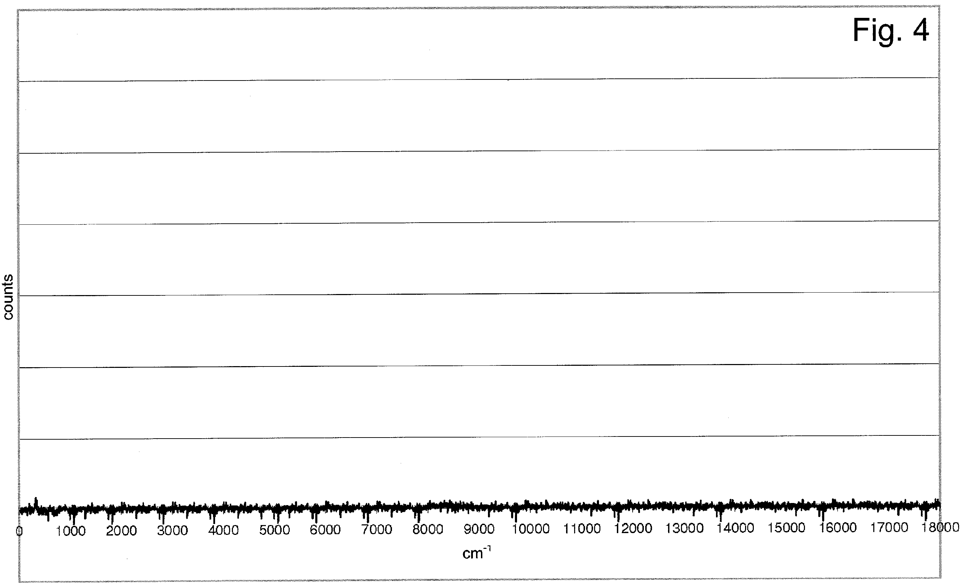

If the substance in this example is illuminated with monochromatic light of a wavelength, which sufficiently deviates from all absorption wavelengths and in particular from the wavelength, which has been used in recording the spectrum of Fig. 3, for example for a deviation of at least 10 nm from this wavelength, a Raman spectrum without any peaks is obtained as shown in Fig. 4.

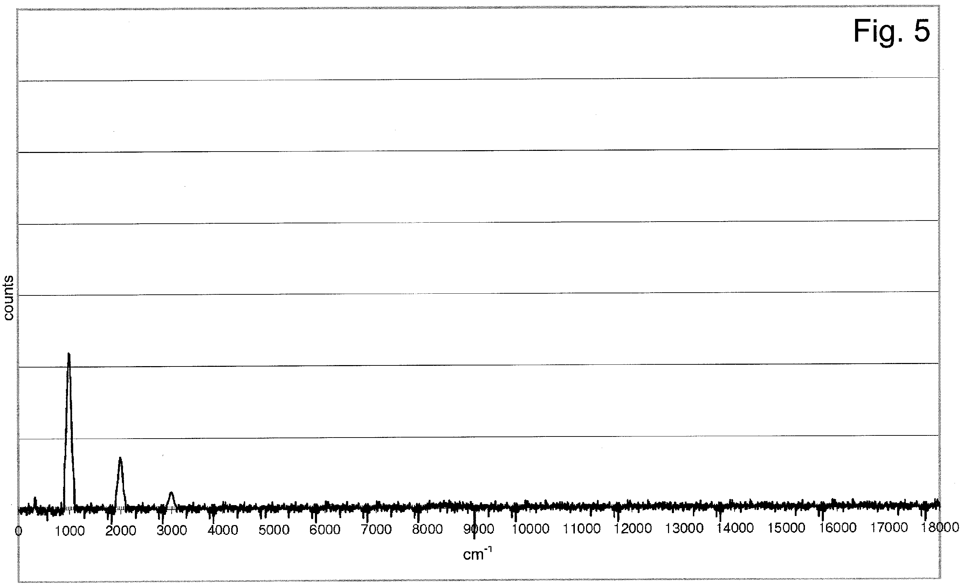

When the wavelength of the light, with which the substance is illuminated, has a smaller deviation and accordingly is nearer the absorption wavelength of the substance, an RRS spectrum is obtained, which has a peak corresponding to the wave number deviation 1000 cm⁻¹, and in addition peaks can be obtained at multiples of this wavelength, i.e. at wavelengths corresponding to the wave number deviations 2000 cm⁻¹ and 3000 cm⁻¹ calculated relative to the wave number corresponding the considered absorption wavelength of the substance. On the other hand, the peak at the second Raman line corresponding to the wave number deviation 3200 cm⁻¹ is not visible in this spectrum, see Fig. 5.

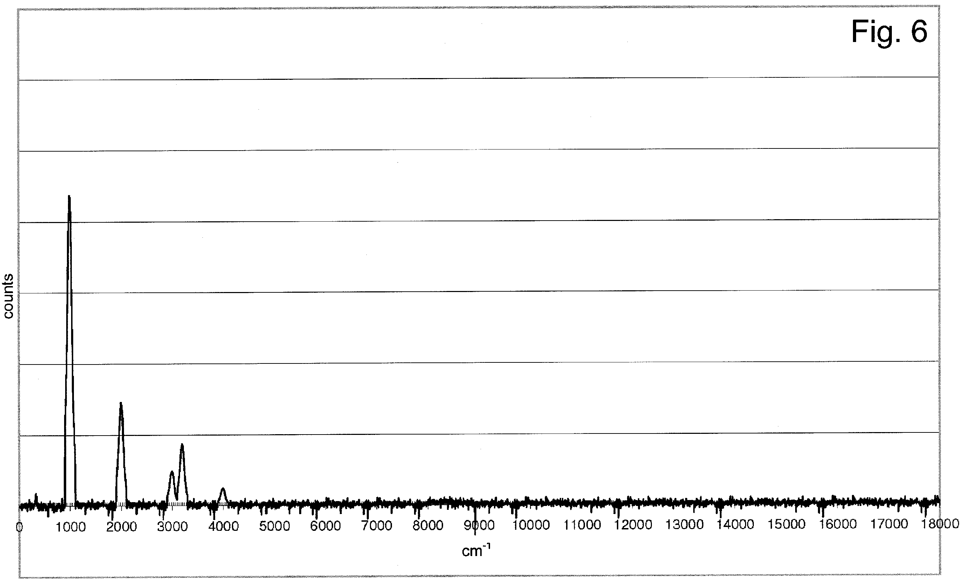

In the case where the wavelength of the light, with which the substance is illuminated, is still closer to the considered absorption wavelength of the substance, an RRS spectrum is obtained, in which the peaks at the wave number deviation 1000 cm⁻¹ and possible multiples thereof are still more enhanced. In addition the peak at the wave number deviation 3200 cm⁻¹ is also visible in the spectrum, see Fig. 6.

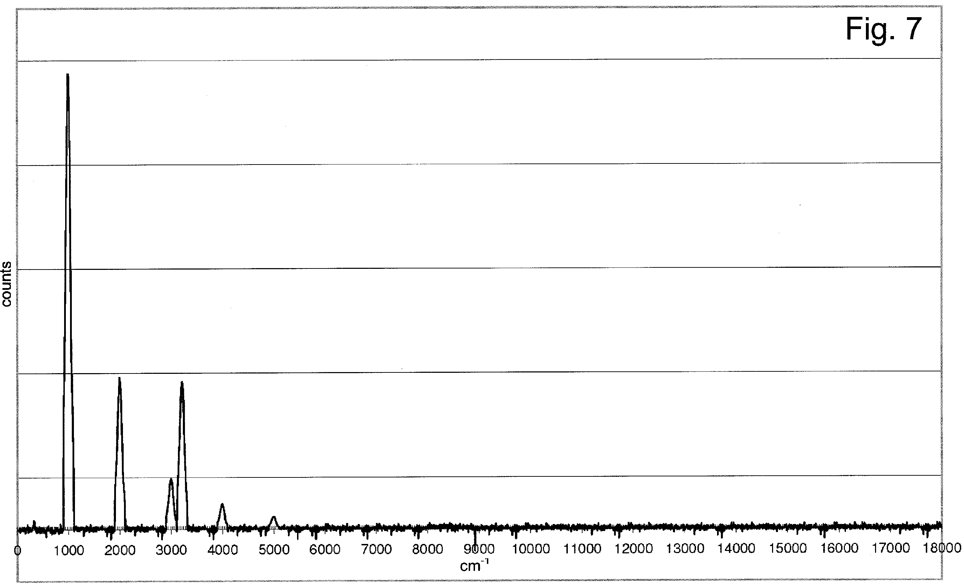

When the wavelength of the light, with which the substance is illuminated, completely corresponds to the actual absorption wavelength, the Raman lines at the wavelength corresponding to the wave number deviation 1000 cm⁻¹ and at multiples of this wave number deviation have their maximum heights, see Fig. 7.

In the diagrams of Figs. 3 - 7 only spectra resulting from anti-Stokes scattering are shown, for which Raman scattering results in light having higher energy. The corresponding spectrum for so called Stokes scattering can be recorded, for which Raman scattering results in light having a lower energy, i.e. light having longer wavelengths. Both or either of these spectra can be used in the methods described below for stand-off-detection.

Generally, the method briefly described above can for example be used to monitor whether an unknown object, which can be available in a solid phase, in a liquid or gaseous phase and which can be located at a distance, contains one of the substances, for example explosives, which can be found in a database together with their associated Raman and RRS spectra. An installation for carrying out the method can then include one or more tunable lasers 1, which are tunable to emit light of different wavelengths, for example within a range between 200 nm and 400 nm, in which many substances of interest have absorption wavelengths. The analysis and image processing unit 19 is coupled to a database stored in a memory 27 and analyses Raman spectra recorded by the spectrometer 5, for example compares them to stored Raman spectra for different substances of interest and presents the result of the comparison for example on the monitor 23.

The method can include the following steps:
1. The laser 1 is set so that it emits light of a wavelength corresponding to an absorption wavelength of a first one of the substances in the database stored in the memory 27.
2. The laser 1 is directed towards the unknown object 3 or towards a point in the neighbourhood of the object.
3. The object 3 is illuminated with light pulses emitted by the laser 1.
4. Light scattered by the object 3 is collected by the optical system 7 and forwarded to the spectrometer 5.
5. The spectrometer 5 divides the light in different wavelengths and the detector 17 detects the light for recording an RRS spectrum.
6. The recorded RRS spectrum is compared to RRS spectra for different substances of interest, in particular the first substance mentioned above. If the object 3 contains the substance which has the absorption line for which the wavelength of laser 1 has been set, the recorded spectrum becomes resonance enhanced, by analysis of the recorded spectrum, be determined whether there are other substances of interest in the substance, in particular whether such substances are present in high concentrations in the object.
7. The wavelength of the light that is emitted from the laser 1 is changed by steps near or close to, for example around, i.e. on both sides of said absorption wavelength, and an RRS spectrum is recorded for each step.
8. The RRS spectra that are obtained in this way and recorded for light of wavelengths near the considered absorption wavelength are analysed in the analysis and image processing unit 19 and they can in particular be compared to the Raman spectra of different substances of interest for the same wavelengths stored in the database. The latter procedure means that a set of spectra is compared to another set.
9. A decision whether the object contains any of the sought-after substances is made by the analysis and image processing unit 19 based on the results of the comparisons made in the points 6. and 8. above and are presented on the monitor 23.
10. The points 1 - 9 are repeated for the other substances of interest.

To achieve additional accuracy in the determination whether a substance exists near or in the object 3 the examination can be performed using illumination with light of wavelengths corresponding to two or more absorption wavelengths for the same substance. The light source can then alternately be tuned to these two wavelengths. The light source can for example first emit a sequence of light pulses of a wavelength near or close to a first absorption wavelength, thereafter another sequence of light pulses of another wavelength near or close to a second absorption wavelength, then yet another sequence of light pulses of another wavelength near or close to the first absorption wavelength, etc.

The light source 1 can in such an examination procedure include a plurality of light emitting units as shown in Fig. 9 and they can then simultaneously emit light pulses of two or more wavelengths, which are tuned in regard of two or more absorption wavelengths for the substance. Of course, this procedure can be used for a simultaneous examination in regard of different substances. The light pulses from the at least two light emitting units then have wavelengths tuned to the absorption wavelengths for two or more different substances. The light from the laser units 1 can be deflected using prisms 12, which are placed, so that the light rays which directly hit the object 3 have a path which is the same as the path for the light, which is collected by the optical system 7. In Fig. 9 it is also shown how the unit 13 for coupling and filtering instead can include a coupling lens 13' at the optical system and a filter 14 arranged at the input of the spectrometer 7.

### Example: Dustbin by a road

As an example the use of the procedure for determining whether a dustbin located by a road contains any hazardous substance, such as some explosive, will now be briefly described. The equipment according to the description above, mainly including laser, telescopic optics, spectrometer including a CCD, calculating unit and presentation unit, can be assembled on/in a vehicle such as truck or private car, not shown. The laser 1 and the telescopic optics 7 can be mounted to the roof of the vehicle and the spectrometer 5 including the CCD unit, control unit, analysis and image processing unit and presentation unit inside the vehicle and an operator in the car issues commands to and supervises the different included components.

Generally, such a vehicle can be used to monitor that e.g. no bombs are placed along a road. When using the vehicle and its equipment the following steps may be performed:
1. The operator sets the equipment to search for TNT (Trotyl), TATP (triacetontriperoxide, common home-made explosive used by terrorists) and hydrogen peroxide (common component in home-made bombs), for example by input to the computer 21 using the keyboard or computer mouse thereof, not shown.
2. The operator discovers a dustbin standing by the road 100 meters further ahead. There is a risk that the dustbin contains an explosive and therefor it will be checked using the equipment whether the dustbin contains TNT or TATP.
3. The operator directs using a VCR sight, compare the unit 29 in Fig. 8, which can be provided with hairlines, not shown, the laser 1 and the telescopic optics 7 towards a handle of the dustbin.
4. The operator pushes a button, not shown, to perform the measurement.
5. The result "None of the sought-after substances found" is presented to the operator by the analysis and image processing unit 19 such as on a monitor 23 inside the vehicle.
6. The operator directs using the VCR sight with hairlines the laser 1 and the telescopic optics 7 towards a place located above the dustbin.
7. The operator again pushes the button to perform a measurement.
8. The result "TNT found" is displayed on the operator's monitor 23.
9. The operator communicates that TNT has been found in the dustbin and a decision about action is made.

In the different steps the following is performed in the equipment:
1. The database in the memory 27 contains data for Raman and RRS spectra according to the description above for a number of substances that the equipment can recognize. In the example this unit is configured to search only for TNT and TATP.
2. The operator uses a VCR with zoom, not shown, belonging to the equipment for searching for suspicious objects. In the example the operator discovers a dustbin by the road that will be checked regarding whether it contains TNT and/or TATP.
3. The operator aims at a detail of the dustbin, on which he believes there may be particles of explosives, for example the handle of the dustbin, using the VCR sight 29, which is possibly provided with zoom and hairlines and which is mechanically coupled to the laser 1 and the telescopic system 7.
4. When the operator pushes the button to execute measurement the following is performed:
   i. The tunable laser 1 is set to an absorption wavelength of TNT.
   ii. 10 light pulses having a length of 10 ns are emitted towards the handle of the dustbin.
   iii. The light scattered by the handle when the light pulses hit it, is collected by the telescopic system 7.
   iv. The wavelength of the light emitted by the laser 1 is shifted by steps of 0.1 nm within a range around the absorption wavelength, which extends 1 nm in both directions from the absorption wavelength and the points i. and ii. are repeated. 21 RRS spectra are obtained in a series of measurement around the absorption wavelength of TNT.
   v. The 21 RRS spectra obtained are by of analysis and image processing module 19 compared to corresponding spectra of TNT, which can be found in the database in the memory 27, for example using different known methods of signal processing.
   vi. The points i. - v. are repeated for TATP.
5. The result of the analysis, for example "None of the sought-after substances found", is displayed on the operator's monitor 23.
6. The operator now instead aims at a position just above the dustbin to try to find fumes of TNT or TATP which may be found inside the dustbin.
7. Step 4 is repeated.
8. The result of the analysis such as "TNT found" is displayed on the operator's monitor 23.

In the point iv. above, measurements may, as been indicated, be performed for a number of separate wavelengths positioned on both sides of the absorption wavelength. Measurements for a number of separate wavelengths within a one-sided interval taken from the absorption wavelength can alternatively be performed, for example when it is known that the highest significance or at least enough significance will be obtained by measurements for smaller wavelengths or for larger wavelengths. The interval of measurement can as been indicated be at most 2 nm corresponding to an one-sided interval of 1 nm. The interval of measurement taken from the absorption wavelength can generally be for example at most 10 nm or still better have a length of at most 5 nm or less than 2 nm, calculated from the absorption wavelength, which for a double-sided measurement corresponds to a total interval of measurement of 20, 10 and 4 nm. The number of measurements in each one-sided interval can be chosen considering the desired accuracy of measurement or more strictly considering the security that is desired in determining whether the sought-after substance or molecules of the specific kind exist/s/ in the object being examined. Even for such a small number as measurements for one or two separate wavelengths on either side of the absorption wavelength, for example at a wavelength distance of 0.5 nm between adjacent wavelengths, a significantly increased security in such a decision can be obtained. However, obviously measurements at more than ten separate wavelengths in each one-sided interval may be used when required or suitable.

## Claims

1. A method of determining whether an object located at a distance from a measuring equipment contains a substance or molecules of one kind, in particular a hazardous substance such as an explosive or a component of an explosive, the object being illuminated with light of a definite wavelength from a light source and the light scattered by the object being analysed for obtaining a Resonance Raman spectrum, the light scattered by the object being collected and
concentrated using an optical system of telescopic type, to be analysed by a spectrometer, whereby the light from the light source is emitted at a wavelength which corresponds to an absorption wavelength of said substance or molecules of said one kind and that a Resonance Raman spectrum is produced,
**characterized in that** in addition the light from the light source is emitted with a plurality of different wavelengths around ; said absorption wavelength, wherein the plurality of different wavelengths are at a small distance from said absorption wavelength compared to the distance between adjacent absorption wavelengths, that a Resonance Raman spectrum is produced for each such wavelength, and that the obtained Resonance Raman spectra are analysed for determining whether the object contains said substance or molecules of said one kind.

2. The method according to claim 1, **characterized in that** the obtained Resonance Raman
spectra are compared to Resonance Raman spectra for the same wavelengths for said substance or molecules of said one kind and that it is determined that the object contains said substance or molecules of said one kind in the case where the result of the comparison indicate that there is enough agreement.

3. The method according to claim 1, **characterized in that** the wavelength of the light emitted by the light source is changed in steps : of a predetermined length, in particular steps having a length of less than 0.5 nm, preferably around 0.1 nm, around the absorption wavelength.

4. The method according to claim 1, **characterized in that** a total interval of measurement is less than 20 nm, preferably less than 10 nm, more preferably less than 4 nm, centred around the absorption wavelength

5. The method according to claim 1, **characterized in that** the light from the light source is emitted with wavelengths which alternately are close to two or more absorption wavelengths of a substance or molecules of said one kind in the object.

6. The method according to claim 1, **characterized in that** the light from the light source is simultaneously emitted with two or more wavelengths being near two or more absorption wavelengths, respectively, of a substance or molecules of said one kind in the object.

7. The method according to claim 1, **characterized in that** the light from the light source is simultaneously emitted with two or more wavelengths near the absorption wavelengths of two or more substances or molecules of two or more kinds, respectively, in the object.

8. The method according to claim 1, **characterized in that** the light is emitted as pulses having controlled starting times and lengths and that the Resonance Raman spectra are recorded during a time window having a controlled start time and length after the light source having emitted every light pulse.

9. A system for determining whether an object located at a distance from the system contains a substance or molecules of one kind, in particular an explosive or components of an explosive, including
- a light source for illumination of the object with light of a definite wavelength,
- an optical system of telescopic type for collection and concentration of the light scattered by the object, and
- a spectrometer for analysis of the light collected by the optical system to obtain a Resonance Raman spectrum, wherein the light source is arranged to emit light of a tunable wavelength, in particular that the light source includes at least one tunable laser,
- -a control unit coupled to the light source in order to make it emit light of a wavelength which corresponds to an absorption wavelength of said substance or molecules of said one kind and to make it emit light of a plurality of wavelengths around said absorption wavelength, wherein the plurality of wavelengths are at a small distance from said absorption wavelength compared to the distance between adjacent absorption wavelengths,
- a detector coupled to or included in the spectrometer to output signals representing recorded Resonance Raman spectra,
**characterized in that** the system further comprises:
- an analysis and image processing unit coupled to the detector and arranged to analyse the Resonance Raman spectra obtained by illumination with light of wavelength at said absorption wavelength and by illumination with light of said plurality of wavelengths around the absorption wavelength in order to determine whether the object contains said substance or molecules of said one kind.

10. The system according to claim 9 , **characterized in that** the analysis and image processing unit is arranged
- to compare the Resonance Raman spectra, that are represented by the signals received from the detector, to Resonance Raman spectra for the same wavelengths for said substance or for the molecules of said one kind, and
- to decide that the object contains said substance or molecules of said one kind in the case where the result of the comparison indicates that there is a sufficient agreement.

11. The system according to claim 9, **characterized by** the control unit being arranged to make the light source emitting the light as pulses having controlled starting times and lengths and also being coupled to the detector to make it record signals representing recorded Resonance Raman spectra during a time window having a controlled start time and length after the light source has emitted every light pulse.

12. The system according to claim 9, **characterized in that** the light source is arranged to emit light of wavelengths which alternately are close to two or more absorption wavelengths for a substance or molecules of said one kind in the object.

13. The system according to claim 9, **characterized in that** the light source includes two or more units which simultaneously or alternately emit light of two or more wavelengths, respectively, which are close to two or more absorption wavelengths, respectively, for a substance or molecules of said one kind in the object.

14. The system according to claim 9, **characterized in that** the light source includes two or more light emitting units which simultaneously or alternately output light of two or more wavelengths, which are close to absorption wavelengths for two or more substances, respectively, or molecules of two or more kinds, respectively, in the object.

## Patentansprüche

1. Verfahren zur Bestimmung, ob ein in einem Abstand zu einer Messausrüstung gelegenes Objekt einen Stoff oder Moleküle von einer Art, insbesondere einen gefährlichen Stoff, wie Sprengstoff oder eine Komponente eines Sprengstoffes enthält, wobei das Objekt mit einem Licht einer definierten Wellenlänge aus einer Lichtquelle beleuchtet wird, und das von dem Objekt gestreute Licht analysiert wird, um ein Resonanz-Raman-Spektrum zu erhalten, wobei das von dem Objekt gestreute Licht unter Verwendung eines optischen Systems in der Art eines Teleskops gesammelt und konzentriert wird, um durch ein Spektrometer analysiert zu werden,
wodurch das Licht aus der Lichtquelle mit einer Wellenlänge ausgegeben wird, die einer Absorptionswellenlänge des Stoffes oder von Molekülen der einen Art entspricht, und dass ein Resonanz-Raman-Spektrum erzeugt wird,
**dadurch gekennzeichnet, dass** das Licht aus der Lichtquelle zusätzlich mit einer Vielzahl von verschiedenen Wellenlängen rund um die Absorptionswellenlänge ausgegeben wird, wobei die Vielzahl von verschiedenen Wellenlängen im Vergleich zum Abstand zwischen benachbarten Absorptionswellenlängen in einem geringen Abstand zur Absorptionswellenlänge sind,
dass ein Resonanz-Raman-Spektrum für jede solche Wellenlänge erzeugt wird, und dass die erhaltenen Resonanz-Raman-Spektren analysiert werden, um zu bestimmen, ob das Objekt den Stoff oder Moleküle der einen Art enthält.

2. Verfahren nach Anspruch 1, **dadurch gekennzeichnet, dass** die erhaltenen Resonanz-Raman-Spektren mit Resonanz-Raman-Spektren für dieselben Wellenlängen für den Stoff oder Moleküle der einen Art verglichen werden, und dass in dem Fall bestimmt wird, dass das Objekt den Stoff oder Moleküle der einen Art enthält, in dem das Ergebnis des Vergleichs anzeigt, dass eine ausreichende Übereinstimmung vorhanden ist.

3. Verfahren nach Anspruch 1, **dadurch gekennzeichnet, dass** die Wellenlänge des aus der Lichtquelle ausgegebenen Lichts in Schritten einer vorbestimmten Länge geändert wird, wobei die Schritte insbesondere eine Länge von weniger als 0,5 nm, vorzugsweise rund um 0,1 nm, um die Absorptionswellenlänge herum aufweisen.

4. Verfahren nach Anspruch 1, **dadurch gekennzeichnet, dass** das Gesamtmessintervall geringer als 20 nm, vorzugsweise geringer als 10 nm, bevorzugter geringer als 4 nm um die Absorptionswellenlänge herum zentriert ist.

5. Verfahren nach Anspruch 1, **dadurch gekennzeichnet, dass** das Licht aus der Lichtquelle mit Wellenlängen ausgegeben wird, die abwechselnd nahe an zwei oder mehr Absorptionswellenlängen eines Stoffes oder von Molekülen der einen Art in dem Objekt sind.

6. Verfahren nach Anspruch 1, **dadurch gekennzeichnet, dass** das Licht aus der Lichtquelle gleichzeitig mit zwei oder mehr Wellenlängen ausgegeben wird, die jeweils nahe an zwei oder mehr Absorptionswellenlängen eines Stoffes oder von Molekülen der einen Art in dem Objekt sind.

7. Verfahren nach Anspruch 1, **dadurch gekennzeichnet, dass** das Licht aus der Lichtquelle gleichzeitig mit zwei oder mehr Wellenlängen ausgegeben wird, die jeweils nahe an zwei oder mehr Absorptionswellenlängen eines Stoffes oder von Molekülen von zwei oder mehr Arten in dem Objekt sind.

8. Verfahren nach Anspruch 1, **dadurch gekennzeichnet, dass** das Licht als Pulse ausgegeben wird, die gesteuerte Startzeiten und Längen aufweisen, und dass die Resonanz-Raman-Spektren während eines Zeitfensters aufgezeichnet werden, das eine gesteuerte Startzeit und Länge aufweist, nachdem die Lichtquelle jeden Lichtpuls ausgegeben hat.

9. System zur Bestimmung, ob ein in einem Abstand zu dem System gelegenes Objekt einen Stoff oder Moleküle von einer Art, insbesondere einen gefährlichen Stoff, wie Sprengstoff oder eine Komponente eines Sprengstoffes enthält, Folgendes beinhaltend
- eine Lichtquelle zum Beleuchten des Objekts mit Licht einer definierten Wellenlänge,
- ein optisches System in der Art eines Teleskops zum Sammeln und Konzentrieren des von dem Objekt gestreuten Lichts, und
- ein Spektrometer zur Analyse des durch das optische System gesammelten Lichts zum Erhalten eines Resonanz-Raman-Spektrums, wobei die Lichtquelle angeordnet ist, um Licht mit einer abstimmbaren Wellenlänge auszugeben, die Lichtquelle insbesondere mindestens einen abstimmbaren Laser beinhaltet,
- eine Steuerungseinheit, die mit der Lichtquelle gekoppelt ist, um sie ein Licht einer Wellenlänge ausgeben zu lassen, die einer Absorptionswellenlänge des Stoffes oder von Molekülen der einen Art entspricht, und um sie ein Licht mit einer Vielzahl von verschiedenen Wellenlängen rund um die Absorptionswellenlänge ausgeben zu lassen, wobei die Vielzahl von verschiedenen Wellenlängen im Vergleich zum Abstand zwischen benachbarten Absorptionswellenlängen in einem geringen Abstand zur Absorptionswellenlänge sind,
- einen Detektor, der mit dem Spektrometer gekoppelt ist oder darin beinhaltet ist, um Signale auszugeben, die aufgezeichnete Resonanz-Raman-Spektren repräsentieren,
**dadurch gekennzeichnet, dass** das System weiter umfasst:
- eine Analyse- und Bildverarbeitungseinheit, die mit dem Detektor gekoppelt ist, und angeordnet ist, um die Resonanz-Raman-Spektren, die durch Beleuchten mit Licht einer Wellenlänge auf der Absorptionswellenlänge und durch Beleuchten mit Licht der Vielzahl von Wellenlängen rund um die Absorptionswellenlänge erhalten werden, zu analysieren, um zu bestimmen, ob das Objekt den Stoff oder Moleküle der einen Art enthält.

10. System nach Anspruch 9, **dadurch gekennzeichnet, dass** die Analyse- und Bildverarbeitungseinheit angeordnet ist
- zum Vergleichen der Resonanz-Raman-Spektren, die durch die von dem Detektor empfangenen Signale repräsentiert sind, mit Resonanz-Raman-Spektren für dieselben Wellenlängen für den Stoff oder für die Moleküle der einen Art, und
- zum Entscheiden, dass das Objekt den Stoff oder Moleküle der einen Art in dem Fall enthält, in dem das Ergebnis des Vergleichs anzeigt, dass eine ausreichende Übereinstimmung vorhanden ist.

11. System nach Anspruch 9, **dadurch gekennzeichnet, dass** die Steuerungseinheit angeordnet ist, um die Lichtquelle das Licht als Pulse ausgeben zu lassen, die gesteuerte Startzeiten und Längen aufweisen, und auch mit dem Detektor gekoppelt sind, um ihn Signale aufzeichnen zu lassen, die aufgezeichnete Resonanz-Raman-Spektren während eines Zeitfensters repräsentieren, das eine gesteuerte Startzeit und Länge aufweist, nachdem die Lichtquelle jeden Lichtpuls ausgegeben hat.

12. System nach Anspruch 9, **dadurch gekennzeichnet, dass** die Lichtquelle angeordnet ist, um Licht mit Wellenlängen auszugeben, die abwechselnd nahe an zwei oder mehr Absorptionswellenlängen eines Stoffes oder von Molekülen der einen Art in dem Objekt sind.

13. System nach Anspruch 9, **dadurch gekennzeichnet, dass** die Lichtquelle zwei oder mehr Einheiten beinhaltet, die gleichzeitig oder abwechselnd Licht von jeweils zwei oder mehr Wellenlängen ausgeben, die jeweils nahe an zwei oder mehr Absorptionswellenlängen für einen Stoff oder Moleküle der einen Art in dem Objekt sind.

14. System nach Anspruch 9, **dadurch gekennzeichnet, dass** die Lichtquelle zwei oder mehr Licht ausgebende Einheiten beinhaltet, die gleichzeitig oder abwechselnd Licht von jeweils zwei oder mehr Wellenlängen ausgeben, die jeweils nahe an den Absorptionswellenlängen für zwei oder mehr Stoffe oder Moleküle von jeweils zwei oder mehr Arten in dem Objekt sind.

## Revendications

1. Procédé pour déterminer si un objet situé à une distance d'un équipement de mesure contient une substance ou des molécules d'un type, en particulier une substance dangereuse telle qu'un explosif ou un composant d'un explosif, l'objet étant éclairé avec une lumière d'une longueur d'onde définie provenant d'une source de lumière et la lumière diffusée par l'objet étant analysée pour obtenir un spectre Raman de résonnance, la lumière diffusée par l'objet étant collectée et concentrée en utilisant un système optique de type télescopique, pour être analysée par un spectromètre,
selon lequel la lumière provenant de la source de lumière est émise à une longueur d'onde qui correspond à une longueur d'onde d'absorption de ladite substance ou desdites molécules dudit un type et un spectre Raman de résonnance est produit,
**caractérisé en ce qu'**en plus la lumière provenant de la source de lumière est émise avec une pluralité de longueurs d'onde différentes autour de ladite longueur d'onde d'absorption, dans lequel la pluralité de longueurs d'onde différentes sont à une petite distance de ladite longueur d'onde d'absorption par rapport à la distance entre des longueurs d'onde d'absorption adjacentes,
**en ce qu'**un spectre Raman de résonnance est produit pour chacune de ces longueurs d'onde, et **en ce que** les spectres Raman de résonnance obtenus sont analysés pour déterminer si l'objet contient ladite substance ou lesdites molécules dudit un type.

2. Procédé selon la revendication 1, **caractérisé en ce que** les spectres Raman de résonnance obtenus sont comparés à des spectres Raman de résonnance pour les mêmes longueurs d'onde pour ladite substance ou lesdites molécules dudit un type et **en ce qu'**il est déterminé que l'objet contient ladite substance ou lesdites molécules dudit un type dans le cas où le résultat de la comparaison indique qu'il y a suffisamment de concordance.

3. Procédé selon la revendication 1, **caractérisé en ce que** la longueur d'onde de la lumière émise par la source de lumière est modifiée par pas d'une longueur prédéterminée, en particulier par pas d'une longueur de moins de 0,5 nm, de préférence d'environ 0,1 nm, autour de la longueur d'onde d'absorption.

4. Procédé selon la revendication 1, **caractérisé en ce qu'**un intervalle total de mesure est de moins de 20 nm, de préférence de moins de 10 nm, plus préférentiellement de moins de 4 nm, centré autour de la longueur d'onde d'absorption.

5. Procédé selon la revendication 1, **caractérisé en ce que** la lumière provenant de la source de lumière est émise avec des longueurs d'onde qui sont alternativement proches de deux ou plus de deux longueurs d'onde d'absorption d'une substance ou de molécules dudit un type dans l'objet.

6. Procédé selon la revendication 1, **caractérisé en ce que** la lumière provenant de la source de lumière est émise simultanément avec deux ou plus de deux longueurs d'onde proches de deux ou plus de deux longueurs d'onde d'absorption, respectivement, d'une substance ou de molécules dudit un type dans l'objet.

7. Procédé selon la revendication 1, **caractérisé en ce que** la lumière provenant de la source de lumière est émise simultanément avec deux ou plus de deux longueurs d'onde proches des longueurs d'onde d'absorption de deux ou plus de deux substances ou molécules de deux ou plus de deux types, respectivement, dans l'objet.

8. Procédé selon la revendication 1, **caractérisé en ce que** la lumière est émise sous forme d'impulsions présentant des temps de départ et des longueurs contrôlés et **en ce que** les spectres Raman de résonnance sont enregistrés pendant une fenêtre temporelle présentant un temps de départ et une longueur contrôlés après que la source de lumière a émis chaque impulsion lumineuse.

9. Système pour déterminer si un objet situé à une distance du système contient une substance ou des molécules d'un type, en particulier un explosif ou des composants d'un explosif, incluant
- une source de lumière pour éclairer l'objet avec une lumière d'une longueur d'onde définie,
- un système optique de type télescopique pour la collecte et la concentration de la lumière diffusée par l'objet, et
- un spectromètre pour l'analyse de la lumière collectée par le système optique pour obtenir un spectre Raman de résonnance, dans lequel la source de lumière est agencée pour émettre une lumière d'une longueur d'onde accordable, en particulier la source de lumière inclut au moins un laser accordable,
- une unité de commande couplée à la source de lumière afin de la faire émettre une lumière d'une longueur d'onde qui correspond à une longueur d'onde d'absorption de ladite substance ou desdites molécules dudit un type et de la faire émettre une lumière d'une pluralité de longueurs d'onde autour de ladite longueur d'onde d'absorption, dans lequel la pluralité de longueurs d'onde sont à une petite distance de ladite longueur d'onde d'absorption par rapport à la distance entre des longueurs d'onde d'absorption adjacentes,
- un détecteur couplé à ou inclus dans le spectromètre pour sortir des signaux représentant des spectres Raman de résonnance enregistrés,
**caractérisé en ce que** le système comprend en outre :
- une unité d'analyse et de traitement d'image couplée au détecteur et agencée pour analyser les spectres Raman de résonnance obtenus par éclairage avec une lumière d'une longueur d'onde à ladite longueur d'onde d'absorption et par éclairage avec une lumière de ladite pluralité de longueurs d'onde autour de la longueur d'onde d'absorption afin de déterminer si l'objet contient ladite substance ou lesdites molécules dudit un type.

10. Système selon la revendication 9, **caractérisé en ce que** l'unité d'analyse et de traitement d'image est agencée
- pour comparer les spectres Raman de résonnance, qui sont représentés par les signaux reçus depuis le détecteur, à des spectres Raman de résonnance pour les mêmes longueurs d'onde pour ladite substance ou pour les molécules dudit un type, et
- pour décider que l'objet contient ladite substance ou lesdites molécules dudit un type dans le cas où le résultat de la comparaison indique qu'il y a une concordance suffisante.

11. Système selon la revendication 9, **caractérisé en ce que** l'unité de commande est agencée pour que la source de lumière émette la lumière sous forme d'impulsions présentant des temps de départ et des longueurs contrôlés et est également couplée au détecteur pour lui faire enregistrer des signaux représentant des spectres Raman de résonnance enregistrés pendant une fenêtre temporelle présentant un temps de départ et une longueur contrôlés après que la source de lumière a émis chaque impulsion lumineuse.

12. Système selon la revendication 9, **caractérisé en ce que** la source de lumière est agencée pour émettre une lumière de longueurs d'onde qui sont alternativement proches de deux ou plus de deux longueurs d'onde d'absorption pour une substance ou des molécules dudit un type dans l'objet.

13. Système selon la revendication 9, **caractérisé en ce que** la source de lumière inclut deux ou plus de deux unités qui émettent simultanément ou alternativement une lumière de deux ou plus de deux longueurs d'onde, respectivement, qui sont proches de deux ou plus de deux longueurs d'onde d'absorption, respectivement, pour une substance ou des molécules dudit un type dans l'objet.

14. Système selon la revendication 9, **caractérisé en ce que** la source de lumière inclut deux ou plus de deux unités d'émission de lumière qui émettent simultanément ou alternativement une lumière de deux ou plus de deux longueurs d'onde, qui sont proches de longueurs d'onde d'absorption pour deux ou plus de deux substances, respectivement, ou molécules de deux ou plus de deux types, respectivement, dans l'objet.
